# DEMANDE DE BREVET EUROPEEN

(11) **EP 2 288 210 A1**
(43) Date de publication de la demande: **23.02.2011**
(21) Numéro de dépôt: 10172532.3
(22) Date de dépôt: 11.08.2010
(51) Int. Cl.: H04W 48/18, H04W 8/18

(54) **Procédé d'établissement d'une connexion entre un objet communicant mobile et un réseau de communication mobile, et objet communiquant associé**

(30) Priorité: 11.08.2009 FR 0955615
(71) Demandeur: Bouygues Telecom, 75008 Paris (FR)
(72) Inventeur: Bressac, Marie, 75010, Paris (FR); Julhe, Damien, 92400 Courbevoie (FR)
(74) Mandataire: Callon de Lamarck, Jean-Robert

(57) **Abrégé**

L'invention porte sur un procédé d'établissement d'une connexion entre un objet communicant mobile (1) et un réseau de communication mobile, l'objet communiquant disposant d'une liste regroupant un nombre déterminé de réseaux de communication mobile préférés (PLMN_{ny}) avec lequel l'objet (1) peut être amené à se connecter, et la liste comprenant une pluralité de sous-listes (110₁, ...,110_{N}) de réseaux (PLMN_{ny}) hiérarchisées de sorte que les réseaux (PLMN_{ny}) inclus dans une sous-liste (110ₙ) sont préférés à l'ensemble des réseaux inclus dans les sous-listes (110ₙ₊₁, ..., 110_{N}) de rang supérieur, le procédé comprenant les étapes consistant à :
1) détecter des réseaux disponibles (PLMN_{20,1}, PLMN_{20,2}, PLMN_{20,3}) ;
2) si l'un au moins des réseaux détectés (PLMN_{20,1}, PLMN_{20,2}, PLMN_{20,3}) appartient à la liste (100), se connecter au réseau préféré (PLMN_{ny}) parmi lesdits réseaux détectés (PLMN_{20,1}, PLMN_{20,2}, PLMN_{20,3}), ledit réseau préféré étant le réseau appartenant à la sous-liste (110₁, ...,110_{N}) de plus petit rang ;
3) si le réseau préféré parmi les réseaux détectés appartient à une sous-liste de rang n supérieur ou égal à 2 :
i)rechercher à intervalles réguliers la disponibilité de nouveaux réseaux ;
ii)si un ou plusieurs réseaux appartenant à une ou des sous-listes de rang inférieur ou égal à n sont détectés comme étant disponibles, se connecter au réseau détecté appartenant à la sous-liste de plus petit rang.

## Description

La présente invention concerne le domaine des objets communicants, et plus particulièrement la sélection d'un réseau auquel un objet communicant doit se connecter lorsqu'il est en itinérance (ou roaming), notamment dans le cadre de la communication entre machines (M2M, Machine to Machine).

En particulier, l'invention s'applique à des objets communicants aptes à se connecter à un réseau de communication mobile pour accéder à des services de communication (appel, transfert de données, etc.). Le réseau est par exemple un réseau GSM (pour Global System for Mobile Communication, i.e. système mondial pour la communication mobile).

Plus précisément, l'invention porte sur un moyen pour un opérateur de choisir le réseau que va utiliser un objet itinérant en fonction de ses préférences. En effet, les coûts des services en itinérance dépendent des accords passés entre les différents opérateurs. Ainsi dans un même pays, pour un opérateur donné, les coûts peuvent varier du simple au double selon le réseau sur lequel sont connectés ses clients itinérants. Par soucis d'économies, celui-ci doit donc pouvoir s'assurer que l'objet communicant ne se connecte qu'aux réseaux qui lui sont avantageux, et que nous nommeront dans ce qui suit « réseaux préférés ».

Par itinérance (ou roaming) on entendra par la suite la faculté pour un objet communicant de communiquer et d'accéder à des services spécifiques quelle que soit sa position géographique.

De nos jours, un objet communicant utilise une UICC 2 (Universal Integrated Circuit Card, pour carte universelle à circuit intégré), dans la mémoire de laquelle est enregistrée une liste de réseaux préférés qui comporte généralement un nombre déterminé de réseaux préférés par l'opérateur, classés par ordre de préférence. Lorsqu'un objet communicant entre en itinérance, le modem se connecte au réseau le mieux placé dans cette liste parmi les réseaux disponibles qu'il aura détectés.

Si aucun des réseaux détectés par l'objet communicant n'appartient à la liste de la UICC 2, l'objet communicant se connecte alors au réseau fournissant le signal le plus fort, jusqu'à ce qu'il perde le signal.

Cette connexion non maîtrisée à un réseau n'appartenant pas à la liste de réseaux préférés de l'opérateur risque de ne pas répondre aux critères économiques et de trafic de l'opérateur.

Il est donc nécessaire de trouver une solution permettant à l'opérateur de forcer le réseau auquel se connecte l'objet communicant lorsque celui-ci est itinérant, et de pallier aux cas où celui-ci ne détecte pas de réseau présent dans sa liste de réseaux préférés.

A cette fin, on connaît du document EP 1 463 366 un procédé de sélection d'un réseau préféré auquel se connecte un objet communicant en itinérance, dans lequel l'opérateur refuse la connexion de l'objet communicant à un réseau donné lorsque ledit réseau n'est pas un réseau préféré compris dans la liste prévue sur l'UICC 2, et force l'objet communicant à rechercher d'autres réseaux jusqu'à ce qu'un réseau préféré soit enfin détecté.

L'accès d'un utilisateur en itinérance aux services peut être plus long que ceux observés usuellement car il n'a accès à aucun service pendant ses différentes tentatives de connexions. Par ailleurs, au bout d'un nombre déterminé d'échecs de connexion à un réseau préféré, le modem se connecte au réseau ayant le signal le plus fort et acceptant l'objet communicant en itinérance. La connexion n'est donc pas totalement maîtrisée par l'opérateur, ce qui peut lui être préjudiciable en termes de coût et d'image.

L'invention vise donc à résoudre ces problèmes, en permettant à un opérateur de garantir que le réseau sélectionné par l'objet communicant appartient à la liste de ses réseaux préférés.

Un autre objectif de l'invention est de permettre à un objet communicant de se connecter rapidement au meilleur réseau disponible.

A cet effet, l'invention propose un procédé d'établissement d'une connexion entre un objet communicant mobile et un réseau de communication mobile, l'objet communiquant disposant d'une liste regroupant un nombre déterminé de réseaux de communication mobile préférés avec lequel l'objet peut être amené à se connecter, et la liste comprenant une pluralité de sous-listes de réseaux hiérarchisées de sorte que les réseaux inclus dans une sous-liste sont préférés à l'ensemble des réseaux inclus dans les sous-listes de rang supérieur, le procédé comprenant les étapes consistant à :
1) détecter des réseaux disponibles ;
2) si l'un au moins des réseaux détectés appartient à la liste, se connecter au réseau préféré parmi lesdits réseaux détectés, ledit réseau préféré étant le réseau appartenant à la sous-liste de plus petit rang ;
3) si le réseau préféré parmi les réseaux détectés appartient à une sous-liste de rang n supérieur ou égal à 2 :
   i) rechercher à intervalles réguliers la disponibilité de nouveaux réseaux ;
   ii) si un ou plusieurs réseaux appartenant à une ou des sous-listes de rang inférieur ou égal à n sont détectés comme étant disponibles, se connecter au réseau détecté appartenant à la sous-liste de plus petit rang.

Certains aspects préférés mais non limitatifs du procédé selon l'invention sont les suivants :
- au cours de la sous-étape 3)ii), on ne compare les réseaux détectés qu'avec les réseaux inclus dans les sous-listes de rang inférieur ou égal au rang de la sous-liste du réseau sélectionné ;
- l'intervalle de recherche de nouveaux réseaux est fonction du rang de la sous-liste ;
- lorsque l'objet communiquant est connecté par défaut à un réseau n'appartenant pas à la liste, seules les utilisations de messages courts et d'appels d'urgence sont autorisées.

Selon un deuxième aspect, l'invention propose un objet communiquant mobile comportant un modem apte à détecter des réseaux de communication mobile disponibles pour l'établissement d'une connexion, comprenant un modem et une UICC, le modem et l'UICC étant configurés pour :
- rechercher les réseaux disponibles ;
- parmi les réseaux disponibles, rechercher le réseau le mieux classé dans une liste comprenant une pluralité de sous-listes de réseaux hiérarchisées ;
- établir une connexion avec le réseau préféré ; et
- mettre en oeuvre à intervalles réguliers une nouvelle détection de réseaux disponibles pour rechercher si un nouveau réseau disponible n'appartient pas à une sous-liste préférée à la sous-liste à laquelle appartient le réseau auquel l'objet est connecté et le cas échéant se connecter au nouveau réseau disponible.

Certains aspects préférés mais non limitatifs de l'objet communicant selon l'invention sont les suivants :
- le modem comporte des moyens permettant d'identifier N-1 balises séparant les N sous-listes ;
- les moyens d'identification du modem sont adaptés pour identifier un identifiant réseau particulier correspondant audites balises ;
- le modem est configuré pour rechercher de nouveaux réseaux disponibles à intervalles réguliers, lesdits intervalles dépendant du rang de la sous-liste à laquelle appartient le réseau auquel l'objet est connecté ; et
- le modem est configuré pour parcourir l'intégralité de la liste.

D'autres caractéristiques, buts et avantages de la présente invention apparaîtront à la lecture de la description détaillée suivante de formes de réalisation préférées de celle-ci, données à titre d'exemples non limitatifs et faite en référence aux dessins annexés sur lesquels :
La figure 1 est un diagramme simplifié montrant un objet communicant en relation avec le réseau local de l'opérateur et un ensemble de réseaux détectés lorsque celui-ci est en itinérance ;
La figure 2 illustre un mode de réalisation possible d'une liste de réseaux préférés selon l'invention, dans lequel la liste comporte N sous-listes de Z réseaux chacune.

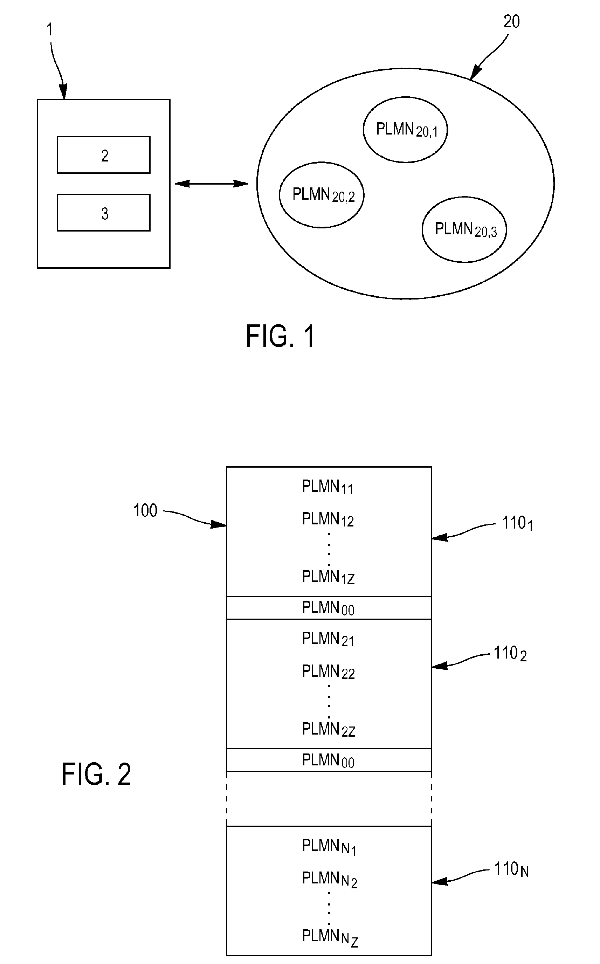

Selon l'invention, et en référence à la Figure 1, un objet communicant 1 comporte une UICC 2 et un modem 3 permettant de connecter ledit objet à un réseau de communication mobile (tel qu'un réseau cellulaire par exemple). A titre d'exemples, l'UICC 2 peut être une carte SIM (pour Subscriber Identity Module), une carte USIM (pour Universal Subscriber Identity Module), etc.

L'objet communicant 1 peut être un téléphone mobile, une voiture, ou tout autre objet comportant une UICC 2 et un modem 3 permettant de se connecter à un réseau mobile.

Lorsque l'objet communicant 1 n'est pas en itinérance, il est connecté au réseau local 10 de son opérateur.

En revanche, lorsque l'objet communicant 1 est en itinérance, le modem 3 recherche un réseau disponible parmi l'ensemble 20 de réseaux détectés PLMN_{20,1}, PLMN_{20,2}, PLMN_{20,3}. Le procédé selon l'invention a donc pour objectif de permettre à l'objet communicant 1 de choisir parmi les réseaux disponibles détectés PLMN_{20,1}, PLMN_{20,2}, ou PLMN_{20,3} celui qui est préférable pour l'opérateur.

Comme représenté sur la figure 2, sur l' UICC 2 est enregistrée une liste 100 regroupant un ensemble de réseaux préférés d'un opérateur classés par ordre de préférence de l'opérateur.

La liste est divisée en un nombre fini N de sous-listes hiérarchisées 110₁, 110₂, ..., 110_{N}, de préférence au moins deux sous-listes 110₁, 110₂, regroupant les réseaux préférés de l'opérateur en fonction de critères prédéterminés.

Les sous-listes 110₁, 110₂, ..., 110_{N} sont ordonnées les unes par rapport aux autres, leur ordre étant déterminé par leur rang n, où n est compris entre 1 et le nombre total N de sous-listes composant la liste 100.

Dans ce qui suit, plus le rang n de la sous-liste 110ₙ est petit, c'est-à-dire plus le rang n de la sous-liste 110ₙ est proche de 1, et plus les réseaux inclus dans la sous-liste 110ₙ seront préférés par l'opérateur.

Nous allons présenter un moyen de construire la liste 100 et ses sous-listes 110₁, 110₂, ..., 110_{N} par l'opérateur.

Un opérateur dispose d'un nombre déterminé de réseaux pour chaque zone géographique où un objet communiquant est supposé pouvoir se déplacer tout en conservant la possibilité d'accéder à des services de communication.

Soit Z le nombre de ces zones géographiques.

En augmentant le nombre de réseaux préférés PLMN_{ny} (où n =1...N et y = 1...Z), on augmente les chances d'avoir un réseau préféré disponible.

On notera d'ailleurs ici que la programmation du modem 3 présent dans l'objet communicant 1 doit prendre en compte cette particularité de la liste de réseaux 100 enregistrée sur l'UICC 2. Si la liste de réseau 100 est effectivement plus importante, alors le comportement du modem 3 doit être adapté pour qu'il puisse la gérer.

Les PLMN_{ny} sont alors classés par ordre de préférence par l'opérateur. L'ordre de préférence est déterminé selon des critères propres à l'opérateur, tels que les tarifs pratiqués par l'opérateur, les services proposés par chacun des réseaux, leur disponibilité globale, leur couverture, etc.

Pour Z zones géographiques, on obtient par conséquent une liste initiale comportant Z classements de réseaux, le nombre de réseaux préférés PLMN pouvant varier d'une zone géographique à l'autre.

Les sous-listes 110₁, 110₂, ..., 110_{N} sont alors construites à partir de cette liste initiale.

Selon ce mode de réalisation, la sous-liste 110₁ de rang n=1 est la sous-liste préférée de l'opérateur, et comporte au moins un réseau préféré pour chaque zone géographique.

Dans l'exemple de la figure 2, chaque sous-liste 110₁, 110₂, ..., 110_{N} ne comporte qu'un seul réseau PLMN_{nz} par zone géographique.

La sous-liste 110₁ de rang n=1 comporte donc le réseau préféré PLMN_{1y} de chaque zone géographique, et regroupe donc Z réseaux.

La sous-liste 110₂ de rang supérieur n=2 est alors construite à partir des réseaux qui n'ont pas encore été classés dans la liste initiale : elle comporte donc le réseau préféré parmi les réseaux restants du classement de chaque zone géographique.

On construit ainsi l'ensemble des sous-listes 110ₙ de rang n à partir des réseaux restant dans la liste initiale après construction des n-1 sous-listes 110₁, 110₂, ..., 110ₙ₋₁ précédentes jusqu'à ce qu'il n'y ait plus de réseau dans ladite liste. La sous-liste 110_{N} de rang N comporte ainsi les réseaux PLMN_{Ny} les moins avantageux pour l'opérateur parmi les réseaux préférés inclus dans la liste initiale. On remarquera que la sous-liste 110_{N} de rang N ne comporte pas nécessairement un réseau par zone géographique si les classements de réseaux par zones géographiques ne comprennent pas initialement un nombre égal de réseaux.

Par ailleurs, on envisage en variante de ne pas inclure dans chaque sous-liste 110₁, 110₂, ..., 110_{N} un nombre égal de réseaux PLMN_{ny} par zone géographique, ce nombre de réseaux par zone géographique pouvant dépendre de plusieurs critères tels que notamment la taille de la zone géographique, le nombre total de réseaux préférés par l'opérateur, les types de services proposés à un utilisateur de l'objet communicant 1, ou encore le type d'objet communicant 1.

Ainsi, on obtient une liste 100 de réseaux préférés PLMN_{ny} classés par ordre de préférence de l'opérateur en un nombre fini N de sous-listes 110₁, 110₂, ..., 110_{N}, dans lesquelles les réseaux PLMN_{ny} inclus dans une sous-liste 110ₙ de rang n inférieur ou égal à N-1 sont tous préférés par l'opérateur à l'ensemble des réseaux inclus dans les sous-listes 110ₙ₊₁, ..., 110_{N} dont le rang est supérieur ou égal à n+1.

De manière connue, chaque réseau PLMN_{ny} est identifié par un identifiant unique codé sur cinq octets, les trois premiers correspondant au code de la zone géographique MCC (pour Mobile Country Code) et les deux derniers correspondant au code du réseau (pour Mobile Network Code) dans cette zone géographique MNC.

Selon un mode de réalisation avantageux, la liste 100 comporte en outre N-1 balises PLMN₀₀ séparant les N sous-listes 110₁, ...,110_{N}, chaque balise étant par exemple codée de la même manière qu'un identifiant de réseau. Le modem 3 est alors adapté pour détecter ces balises.

La liste 100 comporte donc N-1 balises PLMN₀₀ séparant les N sous-listes 110₁, 110₂, ..., 110_{N} de réseaux préférés PLMN_{ny}.

On verra dans ce qui suit qu'une telle séparation simplifie les mises à jour éventuelles de la liste par l'opérateur, permet d'influer sur le comportement du modem 3 et d'éviter des pertes de temps inutiles.

Nous allons à présent décrire un procédé de sélection d'un réseau auquel peut se connecter l'objet communicant 1.

Au cours d'une première étape, on détermine de manière connue si l'objet communicant 1 est en itinérance.

Lorsque l'objet communicant 1 est en itinérance, on détecte alors, par l'intermédiaire du modem 3 présent dans l'objet 1, l'ensemble des réseaux PLMN_{20,1}, PLMN_{20,2}, PLMN_{20,3} disponibles relatifs à l'emplacement dudit objet 1.

Selon un mode de réalisation avantageux de l'invention, la sélection manuelle, i.e. par l'utilisateur de l'objet communicant 1, d'un réseau disponible détecté PLMN_{20,1}, PLMN_{20,2}, PLMN_{20,3}, est désactivée.

Une application est prévue dans le modem 3 lui permettant de balayer l'ensemble des réseaux PLMN_{ny} de la liste 100 et de déterminer si au moins un réseau détecté PLMN_{20,1}, PLMN_{20,2}, PLMN_{20,3} appartient à ladite liste 100 de réseaux préférés PLMN_{nz}.

Ainsi, si au moins un réseau PLMN_{ny} appartient à la liste 100 de réseaux préférés, l'application sélectionne, parmi cet ensemble de réseaux disponibles détectés PLMN_{20,1}, PLMN_{20,2}, PLMN_{20,3}, celui qui appartient à la sous-liste 110₁, 110₂, ..., 110_{N} de rang le plus petit.

Selon une forme de réalisation préférée, l'application sélectionne le réseau qui est en outre classé comme étant, au sein de cette sous-liste 110ₙ, le réseau préféré PLMN_{ny} parmi les réseaux détectés PLMN_{20,1}, PLMN_{20,2}, PLMN_{20,3}, pour cette zone géographique.

Cette sélection est simplifiée notamment par la présence des balises PLMN₀₀ qui définissent clairement les limites entre chaque sous-liste 110₁, 110₂, ..., 110_{N} et qui permettent au modem 3 de ne pas perdre de temps dans la recherche. En effet, par soucis d'économie de temps, le modem 3 balaye de préférence les sous-listes 110₁, 110₂, ..., 110_{N} par ordre de rang croissant, et arrête le balayage dès qu'il rencontre une sous-liste 110ₙ incluant l'un des réseaux disponibles détectés PLMN_{20,1}, PLMN_{20,2}, PLMN_{20,3}. Par construction de la liste 100 de réseaux préférés PLMN_{ny}, le premier réseau rencontré sera nécessairement le réseau préféré de l'opérateur parmi ceux qui ont été détectés PLMN_{20,1}, PLMN_{20,2}, PLMN_{20,3}. On évite ainsi de balayer l'ensemble de la liste 100 inutilement lorsqu'une sous-liste 110ₙ incluant l'un des réseaux détectés a été identifiée.

Le modem 3 se connecte alors au réseau sélectionné par l'application.

Si le réseau appartient à la sous-liste 110₁ de rang n=1, c'est-à-dire la sous-liste préférée de l'opérateur, l'objet communicant 1 reste alors connecté à ce réseau PLMN_{1y} aussi longtemps que la connexion n'est pas interrompue et qu'il reste en itinérance dans la zone géographique associée à ce réseau.

Le modem 3 n'effectue plus de nouvelles recherches de réseau, puisque le réseau PLMN_{1y} auquel est connecté l'objet communicant 1 est optimal pour l'opérateur, ce qui économise en outre la batterie de l'objet communicant 1 ainsi que les ressources réseau de l'opérateur.

Si le réseau sélectionné appartient à une sous-liste de rang n supérieur à 1, le modem effectue un audit (ou rafraîchissement) des réseaux disponibles.

Ce rafraîchissement est opéré à intervalles réguliers par le modem 3. L'intervalle de rafraîchissement peut être spécifié par l'UICC 2.

En variante, le rafraîchissement est déclenché à distance par OTA, l'UICC 2 ou tout autre moyen connu.

Au cours de ces rafraîchissements, l'objet communicant 1 reste connecté au réseau préalablement sélectionné.

On compare alors les nouveaux réseaux détectés aux réseaux préférés inclus dans la liste 100 de l'UICC 2.

Dans un mode de réalisation avantageux, le modem 3 ne compare les réseaux détectés qu'aux réseaux préférés inclus dans les sous-listes 110₁, ..., 110ₙ₋₁ de réseaux dont le rang est inférieur au rang n de la sous-liste 110ₙ incluant le réseau sélectionné. L'étape de comparaison est alors plus rapide, et permet en outre d'économiser la batterie de l'objet communicant 1.

Bien entendu, si la sous-liste 110ₙ comportant le réseau sélectionné inclut plusieurs réseaux préférés pour la zone géographique dans laquelle se trouve l'objet communicant 1, le modem 3 compare également les réseaux détectés avec les réseaux inclus dans ladite sous-liste 110ₙ et préférés au réseau sélectionné.

Si au moins un réseau appartient à l'une des sous-listes 110₁, ..., 110ₙ₋₁ (110ₙ) de rang inférieur (ou égal) à la sous-liste 110ₙ de rang n incluant le réseau actuellement sélectionné, l'application sélectionne, parmi l'ensemble de ces réseaux 110₁, .... 110ₙ₋₁ celui qui appartient à la sous-liste de rang le plus petit parmi ces sous-listes 110₁, .... 110ₙ₋₁ (110ₙ) de rang inférieur ou égal à n.

Selon un mode de réalisation préféré, l'application sélectionne le réseau qui en outre est classé comme étant, au sein de cette sous-liste, le réseau préféré parmi les réseaux détectés pour cette zone géographique.

Ce réseau nouvellement sélectionné est alors préférable pour l'opérateur au réseau précédemment sélectionné, puisqu'il appartient à une sous-liste de rang inférieur, ou du moins qu'il est mieux classé au sein de la sous-liste 110ₙ de rang n.

On réitère alors le procédé jusqu'à ce que le réseau sélectionné soit le réseau préféré parmi l'ensemble des réseaux préférés PLMN_{1y} pour la zone géographique dans laquelle se trouve l'objet communicant 1 inclus dans la sous-liste de rang n=1.

On remarquera qu'au fur et à mesure des rafraîchissements, le modem 3 compare les réseaux détectés avec un nombre de moins en moins grand de réseaux, puisque le nombre de sous-listes 110₁, ..., 110ₙ examinées est réduit à chaque nouvelle sélection de réseau préféré.

Par ailleurs, comme l'objet communicant 1 reste connecté au réseau sélectionné lors des rafraîchissements, et ce malgré le fait que ledit réseau sélectionné ne soit pas optimal pour l'opérateur, la recherche de réseaux est transparente pour l'utilisateur de l'objet communicant 1, puisqu'elle est mise en oeuvre automatiquement et sans intervention de sa part et qu'elle n'interrompt aucun des services de communication en cours : elle ne gêne donc aucunement l'utilisateur de l'objet communicant 1.

Avantageusement, par soucis de transparence pour l'utilisateur, le changement de réseau n'a lieu que lorsque l'utilisateur cesse d'utiliser les services de l'objet communicant.

Selon un mode de réalisation préféré, le rafraichissement est effectué à intervalles réguliers, de préférence fonction du rang n de la sous-liste 110ₙ inclus le réseau sélectionné au moment dudit rafraîchissement.

Avantageusement, plus le rang n de la sous-liste 110ₙ est grand, plus les rafraîchissements sont effectués à intervalles de temps rapprochés définis dans l'UICC 2, afin d'augmenter les chances pour l'opérateur de détecter et d'identifier rapidement un réseau mieux classé dans la liste 100 de réseaux et donc de réduire les coûts engendrés par la connexion.

Par exemple, si le réseau sélectionné appartient à la sous-liste 110₂ de rang n=2, l'intervalle de temps peut aller jusqu'à 8 heures, tandis que si le réseau sélectionné appartient à la sous-liste 110_{N} de rang n=N, il pourra être de l'ordre d'une dizaine de minutes seulement.

En outre, l'opérateur peut associer à tout ou partie des sous-listes 110₁, ...,110_{N} des actions particulières. Par exemple, l'opérateur peut rendre une partie des services indisponibles pour les réseaux appartenant à des sous-listes données.

Ainsi, l'opérateur peut décider de ne rendre disponible que le canal SMS (Short Message Service, pour message court) pour les réseaux appartenant aux sous-listes 110₃, ..., 110_{N} de rang supérieur ou égal à 3.

Dans le cas où aucun des réseaux détectés PLMN_{20,1}, PLMN_{20,2}, PLMN_{20,3} n'appartient à la liste 100 comprise dans l'UICC 2, l'application se connecte par défaut à un réseau détecté, par exemple le réseau dont le signal est le plus fort, c'est-à-dire le réseau dont la réception par l'objet communicant 1 est la meilleure.

On remarquera qu'un tel cas est marginal dans la mesure où, dans le cadre de l'invention, la liste 10 comprise dans l'UICC 2 comporte un très grand nombre de réseaux, avantageusement de l'ordre de plusieurs centaines.

Selon un mode de réalisation possible, lorsque l'objet communicant 1 est connecté à ce réseau par défaut, seul un canal technique (OTA) est ouvert. Les appels d'urgence sont également autorisés.

L'utilisateur ne peut alors pas par exemple utiliser les services de transfert de données ou d'appel. On garantit ainsi que le coût et le trafic engendrés par la connexion à ce réseau non préféré par l'opérateur sont maîtrisés.

Une nouvelle liste de réseaux préférés peut cependant être envoyée à l'UICC 2 par OTA. La liste 100 comprise dans l'UICC 2 peut donc être mise à jour à distance à tout moment par l'opérateur, notamment selon la technologie OTA, et indépendamment de la position de l'objet communicant 1.

Ces mises à jour peuvent porter sur tout ou partie de la liste 100, ajouter de nouvelles sous-listes, compléter des sous-listes existantes 110₁, ...,110_{N}, etc.

Les mises à jour partielles sont d'ailleurs facilitées par la présence des balises PLMN₀₀.

On peut recommencer alors le procédé de sélection d'un réseau selon les étapes décrites plus haut par rapport à cette nouvelle liste à jour.

Si, suite à cela, le modem 3 ne détecte toujours pas de réseau compris dans la nouvelle liste, il reste connecté au réseau par défaut, et réitère le procédé de sélection à intervalles réguliers jusqu'à ce qu'il détecte un réseau préféré.

## Revendications

1. Procédé d'établissement d'une connexion entre un objet communicant mobile (1) et un réseau de communication mobile, l'objet communiquant disposant d'une liste regroupant un nombre déterminé de réseaux de communication mobile préférés (PLMN_{ny}) avec lequel l'objet (1) peut être amené à se connecter, et la liste comprenant une pluralité de sous-listes (110₁, ...,110_{N}) de réseaux (PLMN_{ny}) hiérarchisées de sorte que les réseaux (PLMN_{ny}) inclus dans une sous-liste (110ₙ) sont préférés à l'ensemble des réseaux inclus dans les sous-listes (110ₙ₊₁, ..., 110_{N}) de rang supérieur, le procédé comprenant les étapes consistant à :
1) détecter des réseaux disponibles (PLMN_{20,1}, PLMN_{20,2}, PLMN_{20,3}) ;
2) si l'un au moins des réseaux détectés (PLMN_{20,1}, PLMN_{20,2}, PLMN_{20,3}) appartient à la liste (100), se connecter au réseau préféré (PLMN_{ny}) parmi lesdits réseaux détectés (PLMN_{20,1}, PLMN_{20,2}, PLMN_{20,3}), ledit réseau préféré étant le réseau appartenant à la sous-liste (110₁, ...,110_{N}) de plus petit rang ;
3) si le réseau préféré parmi les réseaux détectés appartient à une sous-liste de rang n supérieur ou égal à 2 :
i) rechercher à intervalles réguliers la disponibilité de nouveaux réseaux ;
ii)si un ou plusieurs réseaux appartenant à une ou des sous-listes de rang inférieur ou égal à n sont détectés comme étant disponibles, se connecter au réseau détecté appartenant à la sous-liste de plus petit rang.

2. Procédé selon la revendication précédente, **caractérisé en ce qu'**au cours de la sous-étape 3)ii), on ne compare les réseaux détectés qu'avec les réseaux inclus dans les sous-listes (110₁, ...,110ₙ) de rang inférieur ou égal au rang de la sous-liste (110ₙ) du réseau sélectionné.

3. Procédé selon l'une des revendications précédentes, **caractérisé en ce que** l'intervalle de recherche de nouveaux réseaux est fonction du rang (n) de la sous-liste (110ₙ)_{.}

4. Procédé selon l'une des revendications précédentes, dans lequel lorsque l'objet communiquant (1) est connecté par défaut à un réseau n'appartenant pas à la liste (100), seules les utilisations de messages courts et d'appels d'urgence sont autorisées.

5. Objet communiquant mobile (1) comportant un modem (3) apte à détecter des réseaux de communication mobile disponibles (PLMN_{20,1}, PLMN_{20,2}, PLMN_{20,3}) pour l'établissement d'une connexion, comprenant un modem (3) et une UICC (2), **caractérisé en ce que** le modem (3) et l'UICC (2) sont configurés pour :
- rechercher les réseaux disponibles (PLMN_{20,1}, PLMN_{20,2}, PLMN_{20,3})
- parmi les réseaux disponibles (PLMN_{20,1}, PLMN_{20,2}, PLMN_{20,3}), rechercher le réseau le mieux classé dans une liste (100) comprenant une pluralité de sous-listes (110₁, ...,110_{N}) de réseaux (PLMN_{ny}) hiérarchisées,
- établir une connexion avec le réseau préféré et
- mettre en oeuvre à intervalles réguliers une nouvelle détection de réseaux disponibles pour rechercher si un nouveau réseau disponible n'appartient pas à une sous-liste préférée à la sous-liste à laquelle appartient le réseau auquel l'objet (1) est connecté et le cas échéant se connecter au nouveau réseau disponible.

6. Objet communiquant mobile (1) selon la revendication précédente, **caractérisé en ce que** le modem comporte des moyens permettant d'identifier N-1 balises (PLMN₀₀) séparant les N sous-listes (110₁, ...,110_{N}).

7. Objet communiquant mobile (1) selon la revendication précédente, **caractérisé en ce que** les moyens d'identification du modem sont adaptés pour identifier un identifiant réseau particulier correspondant audites balises (PLMN₀₀).

8. Objet communiquant mobile (1) selon l'une des revendications 5 à 7, **caractérisé en ce que** le modem (3) est configuré pour rechercher de nouveaux réseaux disponibles à intervalles réguliers, lesdits intervalles dépendant du rang de la sous-liste à laquelle appartient le réseau auquel l'objet (1) est connecté.

9. Objet communiquant mobile (1) selon l'une des 5 à 8, **caractérisé en ce que** le modem (3) est configuré pour parcourir l'intégralité de la liste (100).
